# EUROPEAN PATENT APPLICATION

(11) **EP 4 358 380 A1**
(43) Date of publication of application: **24.04.2024**
(21) Application number: 22203037.1
(22) Date of filing: 21.10.2022
(51) Int. Cl.: H02M 1/00, H02M 5/00, F03D 7/02

(54) **BOOSTING WIND TURBINE POWER OUTPUT**

(71) Applicant: Siemens Gamesa Renewable Energy A/S, 7330 Brande (DK)
(72) Inventor: Goldenbaum, Nikolaus, 8680 Ry (DK); Kastholt, Andreas, 8700 Horsens (DK); Thisted, Jan, 8830 Tjele (DK)
(74) Representative: SGRE-Association

(57) **Abstract**

It is described a method of boosting power output (8) of a wind turbine (1) above a nominal power output (30), the method comprising: determining dynamically a maximum active power production limit (15, Pmax) in dependency of a voltage (16, Vref) related to a wind turbine output terminal (9); setting a power output (11, 8) of the wind turbine (1), during a power boost operation, to be lower than or equal to the maximum active power production limit (15, Pmax).

## Description

### Field of invention

The present invention relates to a method and a corresponding arrangement of boosting power output of a wind turbine above a nominal power output. Furthermore, the present invention relates to a wind turbine comprising the arrangement.

### Art Background

EP 3 792 482 A1 discloses power boost for a wind turbine and a method of controlling a wind turbine comprising the step of boosting the power output of the wind turbine above the nominal power of the wind turbine according to a boost operational function which is a crescent function of an operational variable at least between a first threshold value and a second threshold value of the operational variable.

A conventional power boost feature may increase the active power production of the wind turbine by 5% above the nominal power output, if the respective wind turbine has an unused power capacity. Increasing the power output even above the power boost level such as 5% has the risk to deteriorate the stability of the main electrical circuit of the wind turbine, in particular deteriorate stability of the operation of the converter. The risk of deteriorating the stability may in particular apply for low and high voltage scenarios. Conventionally, a power boost function may be disabled, when the voltage is in a low or in a high voltage range, thus, for example, if the voltage drops or rises according to defined thresholds.

However, it has been observed that the conventional methods and arrangements are not providing satisfactory performance in all circumstances with respect to a power boost functionality.

Thus, there may be a need for a method and a corresponding arrangement capable of allowing to advantageously increase the power output of the wind turbine without risking deterioration of the stability of the electrical circuit in particular to improve the stability of the generator system operation, in particular the converter operation during the boost function.

### Summary of the Invention

This need may be met by the subject matter according to the independent claims. Advantageous embodiments of the present invention are described by the dependent claims.

According to an embodiment of the present invention, a method is provided where a dynamic maximum active power profile is defined and utilized during a power boost function, wherein it is possible to increase the power boost without a hard limit for disabling the feature by implementing a profile in the converter control.

According to an embodiment of the present invention it is provided a method of boosting power output of a wind turbine above a nominal power output, the method comprising determining dynamically a maximum active power production limit in dependency of a voltage value related to a wind turbine output terminal and setting a power output of the wind turbine, during a power boost operation, to be lower than or equal to the maximum active power production limit.

The method may be implemented in software and/or hardware and may for example be performed by a module of a wind turbine controller, in particular a module for controlling a generator system of the wind turbine or a module for controlling a converter of the wind turbine.

The wind turbine may comprise a nacelle harbouring a rotatably supported rotation shaft at which plural rotor blades are mounted. The rotation shaft may rotate within an electrical generator, such as a permanent magnet synchronous generator or a doubly fed induction generator, for example. The generator may output three-phase AC power which may be supplied to a converter, in particular including an AC/DC portion, including a DC link and including a DC/AC converter portion. The converter may comprise plural controllable switches, such as IGBTs.

The converter may be controlled by a converter control portion which may for example be configured to perform the method of boosting the power output. In this respect, the control module may generate control signals which are supplied to the converter, in particular supplied to respective gates of the controllable switches. The converter control module may be configured to control the power output at the output terminal of the converter or in general of the power output of the generator system, for example including at least the generator but additionally also the converter.

Boosting the power output of the wind turbine may be applied in particular conditions, such as depending on at least one operational variable of the wind turbine. In particular, boosting the power output may be applied when the wind speed is above a threshold, such as above a nominal wind speed value. Applying the boosting functionality including to boost the power output above the nominal power output may respect other operational limits of the components of the wind turbine. The power boosting functionality may be applied during transient times, such that it is not applied continuously over prolonged time ranges. The power boosting function may for example be applied for a time range between 15 s and 5 min for example. During performing the power boosting functionality, the power output of the wind turbine may be increased, in particular above the nominal power output, but may be set to stay not above the maximum active power production limit which is determined in dependency of a voltage value related to a wind turbine output terminal.

Thus, the maximum active power production limit represents a limit above which the power output even during the power boosting function is not increased. However, the power output of the wind turbine during the power boosting function may be lower than the maximum active power production limit, for example due to risks of exceeding some other operational limits of the components of the wind turbine. The maximum active power production limit is determined dynamically, thus subject to change if the voltage value related to the wind turbine output terminal changes. In particular, the maximum active power production limit may not be constant for different voltage values related to the wind turbine output terminal. Thereby, undesired instability problems in electrical circuitry of the wind turbine, in particular voltage ranges, may be avoided or at least decreased.

The voltage value related to the wind turbine output terminal may be indicative of a reference voltage or a measured voltage or a derived voltage at the wind turbine output terminal, in particular at a generator system output terminal of the wind turbine. Depending on the wind turbine output terminal related voltage, a risk of instability of the main electrical circuit of the wind turbine, in particular the converter circuit, may evolve. This instability problem or risk may be reduced or even avoided according to embodiments of the present invention by dynamically determining and setting the maximum active power production limit, for example to be lower in particular voltage ranges or to be higher in other voltage ranges of the wind turbine output terminal related voltage.

The power output of the wind turbine may represent the power output of a generator system of the wind turbine, in particular a power output at a power output terminal of a converter of the wind turbine which is connected to a generator of the wind turbine.

Conventionally, the maximum active power production limit may have been set to a constant for the boosting power functionality without respecting the wind turbine output terminal related voltage. However, when, according to embodiments of the present invention, the maximum active power production limit is determined dynamically in dependency or in dependence or as a function of the wind turbine output related voltage, electrical stability of the wind turbine during operation in the power boosting mode may be improved.

According to an embodiment of the present invention, the voltage related to wind turbine output terminal is one of a reference voltage for the wind turbine output terminal; a measured voltage at the wind turbine output terminal; a derived voltage at the wind turbine output terminal, the wind turbine output terminal being formed by a generator output terminal or a converter output terminal, the converter being connected to a generator.

The reference voltage may for example be supplied from a wind farm controller to the respective wind turbine or a wind turbine controller, in particular generator system controller, further in particular converter controller. The measured voltage at the wind turbine output terminal may be obtained by operating particular measurement equipment for example measuring the voltage at the wind turbine output terminal. The derived voltage may be calculated or derived or inferred from operational measurement data of the wind turbine. Usually, the measured voltage may substantially correspond to or be equal to the reference voltage. In particular situations, however, the measured voltage may differ from the reference voltage. Thus, considering the measured voltage in these situations may be advantageous in order to reduce or even avoid risky situations of impairing the electrical stability of the wind turbine system.

Thereby, great flexibility is provided for defining or obtaining the wind turbine output related voltage.

According to an embodiment of the present invention, the maximum active power production limit is defined in a definition voltage range including a nominal wind turbine output voltage, the maximum active power production limit in particular being, at least in most, e.g. in a substantial part, or at least in a part or a portion of the definition voltage range, greater than a nominal power output of the wind turbine.

The definition voltage range may also define the voltage range (of the wind turbine output related voltage) in which the power boosting functionality is applied. For other voltages excluding the definition voltage range, the power boosting functionality may be disabled, since it may be too risky to perform the power boosting functionality outside the definition voltage range.

The maximum active power production limit may for example be greater than the nominal power output of the wind turbine in at least 80% of the definition voltage range, in particular may be even greater than the nominal power output in at least 90% of the definition voltage range. The nominal power output of the wind turbine may be the rated power output of the wind turbine in which the wind turbine is designed to operate in a continuous manner.

According to an embodiment of the present invention, the maximum active power production limit is derived from a look up table or using a gain or a mathematical equation.

The look up table may list different values of the maximum active power production limit in dependency of different values of the wind turbine output related voltage. The mathematical equation may for example comprise a function depending on the wind turbine output related voltage which calculates the associated maximum active power production limit. Thereby, great flexibility is provided for implementing the method.

According to an embodiment of the present invention, in a first, in particular undervoltage, voltage range the maximum active power production limit is below an absolute maximum active power production limit, wherein the first voltage range in particular contains voltage values below a nominal wind turbine output voltage.

The absolute maximum active power production limit may be a limit above which the maximum active power production limit as dynamically determined does not exceed. According to embodiments of the present invention, the absolute maximum active power production limit may have been conventionally applied irrespective of a wind turbine output related voltage. The absolute maximum active power production limit may be defined or set in dependency of a plurality of operational limits of wind turbine components. In the first voltage range, the maximum active power production limit may vary with varying wind turbine output related voltage. Thereby, flexibility is provided for setting the maximum active power production limit.

According to an embodiment of the present invention, in a second voltage range, in particular above the first voltage range, the maximum active power production limit is substantially at the absolute maximum active power production limit, wherein the second voltage range in particular contains voltage values below and above but close (e.g. about ± 3 to 5%) to the nominal wind turbine output voltage.

The second voltage range may therefore allow to increase the power output during the power boosting functionality up to the absolute maximum active power production limit. This voltage range may for example comprise voltage values between +/- 5% or less of the nominal wind turbine output terminal voltage. In other embodiments, the maximum active power production limit is not constant in the second voltage range but may also vary with varying wind turbine output related voltage.

According to an embodiment of the present invention, in a third, in particular overvoltage voltage range, in particular above the second voltage range, the maximum active power production limit is below the absolute maximum active power production limit, wherein the third voltage range in particular contains voltage values above the nominal wind turbine output voltage.

In the third voltage range, the maximum active power production limit may vary with varying wind turbine output terminal related voltage, in particular in a declining manner. Thereby, risky situations regarding stability of the electrical circuitry of the wind turbine may be reduced or even avoided for particular overvoltage conditions.

However, decrease of the maximum active power production limit or in general power output is optional, thus not performed in other embodiments.

According to an embodiment of the present invention, the absolute maximum active power production limit is in a range of 1.05 to 1.15, in particular substantially at 1.1, times a nominal power output of the wind turbine.

In other embodiments, the ranges are set to other values. The limits may be set according to the particular configuration of the wind turbine and the particular application.

According to an embodiment of the present invention, a power boost operation is disabled when the wind turbine output terminal related voltage is outside the definition voltage range, in particular outside the first voltage range, the second voltage range and the third voltage range. When the power boost operation is disabled, risk of instability of the electrical system may be avoided.

According to an embodiment of the present invention, in the first voltage range the maximum active power production limit increases, in particular linearly, with increasing wind turbine output terminal related voltage; and/or wherein in the third voltage range the maximum active power production limit decreases, in particular linearly, with increasing wind turbine output terminal related voltage.

Thereby, it may be allowed to increase the maximum active power production limit when the wind turbine output related voltage approaches from below towards the nominal voltage, such as to allow to increase power output of the wind turbine. When the maximum active power production limit is set to be the lower, the higher the wind turbine output related voltage is (thus, the maximum active power production limit decreases with increasing wind turbine output related voltage), risk of instability of the electrical circuitry may be reduced or even avoided, when the wind turbine output related voltage increases more and more away from the nominal voltage value of the wind turbine output terminal.

According to an embodiment of the present invention, the first voltage range being 0.90 to 0.98 times a nominal wind turbine output voltage, and/or the second voltage range being 0.98 to 1.08 times a nominal wind turbine output voltage, and/or the third voltage range being 1.08 to 1.10 times a nominal wind turbine output voltage.

In other embodiments, other values may be set for the first, the second and/or the third voltage ranges and may be set according to the particular configuration of the wind turbine and/or the operational parameters.

According to an embodiment of the present invention, the power boost operation is performed if a wind speed is above a wind speed threshold, wherein power output during the power boost operation varies in particular with varying wind speed.

If the wind speed is above a wind speed threshold, for example a nominal wind speed, more power may be extracted from the wind and for example the rotational speed of the generator or the generator torque may be increased, resulting in higher power output of the wind turbine. Further, the power output may be increased for increasing wind speed.

According to an embodiment of the present invention, the wind turbine comprises a generator system, in particular comprising a converter, the wind turbine output terminal being an output terminal of the generator system.

The wind turbine may further comprise a transformer which may be connected to the generator system. The wind turbine output terminal may either be a primary side or a secondary side of the wind turbine transformer, if present.

It should be understood, that features, individually or in any combination, disclosed, described, explained or provided for a method of boosting power output of a wind turbine may also, individually or in any combination, apply to an arrangement for boosting power output of the wind turbine according to embodiments of the present invention and vice versa.

According to an embodiment of the present invention it is provided an arrangement for boosting power output of a wind turbine above a nominal power output, the arrangement comprising an input port for receiving a voltage related to a wind turbine output terminal; a processing portion adapted to determine dynamically a maximum active power production limit in dependency of the voltage related to the wind turbine output terminal, wherein the arrangement is adapted to set a power output of the wind turbine, during a power boost operation, to be lower than or equal to the maximum active power production limit.

The arrangement may be a portion of a wind turbine controller, in particular a portion of a generator system controller or in particular a converter controller of the wind turbine. The arrangement may be implemented in software and/or hardware.

According to an embodiment it is provided a wind turbine, comprising: a generator system, in particular comprising a converter; an arrangement according to the preceding embodiment coupled to the generator system to set the power output of the wind turbine, in particular the power output of the generator system.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an exemplary embodiment of the present invention; and
Fig. 2 illustrates a graph for illustrating an exemplary embodiment of the present invention.

### Detailed Description

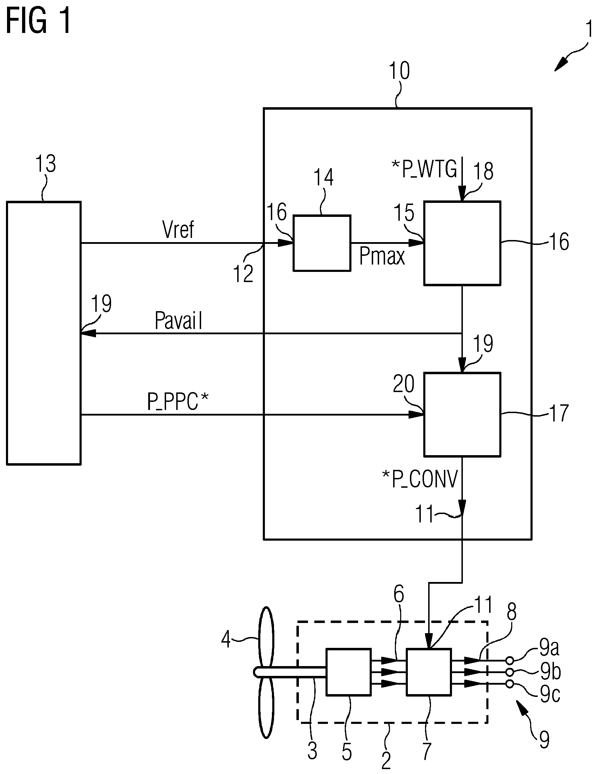

The wind turbine 1 schematically illustrated in Fig. 1 comprises a generator system 2 which is coupled to a rotation shaft 3 at which plural rotor blades 4 are connected. In the illustrated example, the generator system 2 comprises a generator 5 (for example permanent magnet synchronous generator) which outputs three-phase AC power 6 upon rotation of the rotation shaft 3. In other embodiments the generator may output AC power having another number of phases, less or more phases, e.g. six phases. The AC power 6 is supplied to a converter 7 (also comprised within the generator system 2), wherein the converter 7 is configured to convert the variable frequency AC power 6 to substantially fixed frequency AC power 8 which is output at output terminals 9a, 9b, 9c representing the power output terminals of the generator system 2 and also representing power output terminals of the entire wind turbine 1. The output terminal 9a, 9b, 9c may then be connected to for example (e.g. via a transformer) a point of common coupling to which plural wind turbines are connected. Via one or more transmission lines, the wind park may be connected to a utility grid.

The wind turbine 1 further comprises an arrangement 10 for boosting power output of the wind turbine 1 according to an embodiment of the present invention. The arrangement 10 coupled to the generator system 2, to set the power output 8 of the wind turbine 1, according to a method of boosting the power output of the wind turbine 1 above a nominal power output as will be explained below. In particular, the arrangement 10 is coupled to the generator system in that a converter control signal 11 is output by the arrangement and is supplied to the generator system 2 in particular supplied to the converter 7. The generator system control signal 11 thereby defines the power output of the generator system 2, in particular during a boosting power function of the wind turbine 1.

The arrangement 10 comprises an input port 12 for receiving a voltage related to a wind turbine output terminal 9a, 9b, 9c. In the illustrated example, the arrangement 10 receives at the input port 12 a reference voltage Vref for the wind turbine output terminal 9a, 9b, 9c (collectively referred to as output terminal 9). The reference voltage Vref is output by a park controller 13 controlling, besides the wind turbine 1, plural other wind turbines. In other embodiments, the arrangement 10 may for example receive a measured voltage or a derived voltage at the wind turbine output terminal 9.

The arrangement 10 further comprises a processing portion 14 which is adapted to determine dynamically a maximum active power production limit 15 (Pmax) in dependency of the voltage related to the wind turbine output terminal, i.e. the input signal 16 which is input to the input port 12 which is according to the illustrated embodiment the reference voltage Vref of the wind turbine output terminal. The processing portion 14 is in the illustrated example implemented as a look up table but may in other embodiments be implemented for example by a mathematical function or a reference curve, for example, or a gain.

The arrangement 10 is further configured and adapted to set a power output (represented by the control signal 11) of the wind turbine 1, in particular during a power boost operation which is lower than or equal to the maximum active power production limit 15 (Pmax). In the illustrated embodiment, the arrangement 10 thereby uses minimum function blocks 16, 17. In the illustrated embodiment, the maximum active power production limit 15 is received by the minimum block 16 which also receives a preliminary wind turbine reference power 18 (*P_wtg). The preliminary power reference 18 may for example be determined by a wind turbine control module independently of any power reference as set by the wind park controller 13. The minimum of the values 15, 18 is determined by the minimum block 16 and is output as a minimum signal 19. The signal 19 may, according to the illustrated embodiment, also be communicated to the wind park controller 13 as Pavail, for example.

The minimum value 19 is received by the further minimum block 17 which receives also a wind park controller power reference 20 (P-PPC*). The minimum block 17 determines the minimum of the input values 19, 20 and outputs the minimum as the control signal 11 defining the power output of the generator system 2 also referred to as *P_CONV.

In other embodiments, the arrangement 10 may be implemented in a different manner. The arrangement 10 is configured to perform a method of boosting power output of the wind turbine 1 according to an embodiment of the present invention as explained above.

The maximum active power production limit 15 may for example be set in accordance to a look up table a part of which is illustrated as the table 1 below:

**Table 1:**

| Voltage Reference from PPC | Maximum Active Power Production Limit |
|---|---|
| 0.90 p.u. | 0.97 p.u. (Power Boost limit) |
| 0.98 p.u. | 1.10 p.u. (10% Power Boost) |
| 1.08 p.u. | 1.10 p.u. (10% Power Boost) |
| 1.10 p.u. | 1.00 p.u. (Power Boost disabled) |

A look up table may for example comprise plural entries for different values of the wind turbine output terminal related voltage across a definition range.

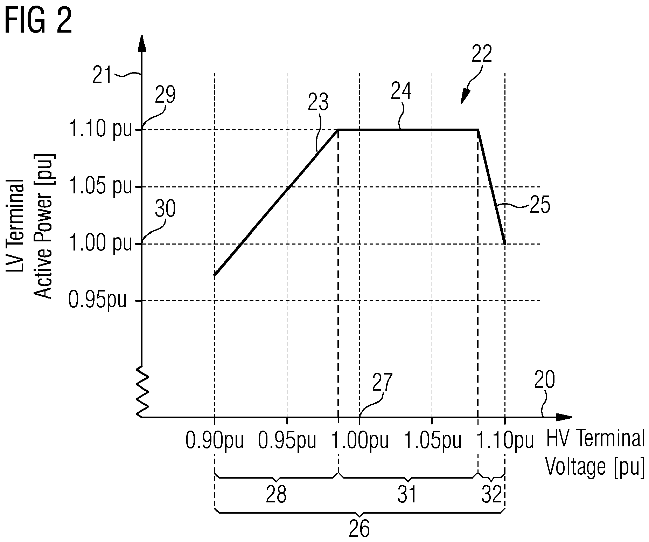

**Fig.** 2 illustrates in a coordinate system having an abscissa 20 representing the wind turbine output related voltage and having an ordinate 21 representing the maximum active power production limit (for example the quantity 15 illustrated in Fig. 1) a curve 22 graphically illustrating the dependency of the maximum active power production limit 15 in relation to the wind turbine output terminal related voltage. The curve 22 comprises in the illustrated embodiment three sections or portions 23, 24, 25 across a definition voltage range 26. The definition voltage range 26 includes the nominal wind turbine output voltage 27 expressed as value per unit pu. Thus, 1.0 pu represents the nominal output voltage of the wind turbine.

The curve portion 23 is defined in a first voltage range 28 which is an undervoltage range with respect to the nominal voltage 27. In the first voltage range, the maximum active power production limit is below an absolute maximum active power production limit 29 which is in the illustrated embodiment 1.1 pu thus is 10% above the nominal power output. The nominal power output 30 is also illustrated in Fig. 2 corresponding to 1.00 pu. As can be appreciated from Fig. 2 considering curve portion 23, the maximum active power production limit increases in a linear manner with increasing wind turbine output terminal related voltage.

The curve portion 24 is defined in a second voltage range 31 and the curve portion 24 is substantially at the maximum active power production limit or at the absolute maximum active power production limit 29 thus being constant across the second voltage range 31.

The curve portion 25 is defined in a third voltage range 32 and is below the absolute maximum active power production limit 29. In particular, the maximum active power production limit in the third voltage range 32 decreases with increasing wind turbine output terminal related voltage.

According to other embodiments, the different voltage ranges 28, 31, 32 may be set to different values or ranges depending on the application and also the curve shapes in the particular curve sections 23, 24, 25 may be altered, for example to comprise curved portions or steplike portions.

As can be appreciated from Fig. 2, the power output during the boost power operation may be increased up to 10% above the nominal power output 30. The dynamic maximum active power profile as is for example illustrated in Fig. 2 as the profile or curve 22 may be implemented in the turbine control (or alternatively a sub-system such as a converter control) for example as a look up table (or as a gain or equation as a function of a signal). The input signal may be the voltage reference sent to the turbine from the power plant controller (PPC) and it could also be a measured or derived value.

Embodiments of the present invention may be implemented in plural wind turbines thereby allowing to increase the active power output. According to an embodiment of the present invention, the dynamic power boost may not influence the wind turbine power system stability in a way as conventionally observed, because of the reduced active power in the lower and higher voltage ranges. When the wind turbine operates close to the nominal voltage [1 pu to 1.05 pu], the active power may be increased with additional percentage to the already applied increase of 5% in conventional systems.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of boosting power output (8) of a wind turbine (1) above a nominal power output (30), the method comprising:
determining dynamically a maximum active power production limit (15, Pmax) in dependency of a voltage (16, Vref) related to a wind turbine output terminal (9);
setting a power output (11, 8) of the wind turbine (1), during a power boost operation, to be lower than or equal to the maximum active power production limit (15, Pmax).

2. Method according to the preceding claim, wherein the voltage (16) related to wind turbine output terminal is one of:
a reference voltage (Vref) for the wind turbine output terminal (9);
a measured voltage at the wind turbine output terminal (9) ;
a derived voltage at the wind turbine output terminal (9) ;
the wind turbine output terminal (9) being formed by a generator output terminal or a converter output terminal, the converter (7) being connected to a generator (5).

3. Method according to any of the preceding claims, wherein
the maximum active power production limit (15, Pmax) is defined in a definition voltage range (26) including a nominal wind turbine output voltage (27),
the maximum active power production limit (15) in particular being, at least in most of the definition voltage range, greater than a nominal power output (30) of the wind turbine.

4. Method according to any of the preceding claims, wherein the maximum active power production limit (15) is derived from a look up table or using a gain or a mathematical equation.

5. Method according to any of the preceding claims, wherein in a first, in particular undervoltage, voltage range (28) the maximum active power production limit (23) is below an absolute maximum active power production limit (29),
wherein the first voltage range in particular contains voltage values below a nominal wind turbine output voltage.

6. Method according to the preceding claim, wherein in a second voltage range (31), in particular above the first voltage range, the maximum active power production limit (24) is substantially at the absolute maximum active power production limit (29),
wherein the second voltage range in particular contains voltage values below and above but close to the nominal wind turbine output voltage.

7. Method according to any of the two preceding claims,
wherein in a third, in particular overvoltage voltage range (31), in particular above the second voltage range, the maximum active power production limit (25) is below the absolute maximum active power production limit (29),
wherein the third voltage range in particular contains voltage values above the nominal wind turbine output voltage.

8. Method according to any of the preceding claims 5 to 7, wherein the absolute maximum active power production limit (15, Pmax) is in a range of 1.05 to 1.15, in particular substantially at 1.1, times a nominal power output of the wind turbine.

9. Method according to any of the preceding claims 3 to 8, wherein a power boost operation is disabled when the wind turbine output terminal related voltage (16) is outside the definition voltage range (26), in particular outside the first voltage range, the second voltage range and the third voltage range.

10. Method according to any of the preceding claims 5 to 9,
wherein in the first voltage range (28) the maximum active power production limit (23) increases, in particular linearly, with increasing wind turbine output terminal related voltage (20); and/or
wherein in the third voltage range (32) the maximum active power production limit (25) decreases, in particular linearly, with increasing wind turbine output terminal related voltage (20).

11. Method according to any of the preceding claims 5 to 10,
the first voltage range (28) being 0.90 to 0.98 times a nominal wind turbine output voltage, and/or
the second voltage range (31) being 0.98 to 1.08 times a nominal wind turbine output voltage, and/or
the third voltage range (32) being 1.08 to 1.10 times a nominal wind turbine output voltage.

12. Method according to any of the preceding claims, wherein
the power boost operation is performed if a wind speed is above a wind speed threshold,
wherein power output during the power boost operation varies in particular with varying wind speed.

13. Method according to any of the preceding claims, the wind turbine (1) comprising a generator system (2), in particular comprising a converter (7), the wind turbine output terminal (9) being an output terminal of the generator system (2).

14. Arrangement (10) for boosting power output of a wind turbine (1) above a nominal power output (30), the arrangement comprising:
an input port (12) for receiving a voltage (16) related to a wind turbine output terminal (9);
a processing portion (14) adapted to determine dynamically a maximum active power production limit (15, Pmax) in dependency of the voltage (16) related to the wind turbine output terminal;
wherein the arrangement is adapted to set a power output (11, 8) of the wind turbine, during a power boost operation, to be lower than or equal to the maximum active power production limit (15, Pmax).

15. Wind turbine (1), comprising:
a generator system (2), in particular comprising a converter (7);
an arrangement (10) according to the preceding claim coupled to the generator system (2) to set the power output (11, 8) of the wind turbine, in particular the power output of the generator system (2).
